Europäisches Patentamt

European Patent Office

Office européen des brevets

(19)

(11) Publication number: **0 047 383**
**B1**

(12) **EUROPEAN PATENT SPECIFICATION**

(45) Date of publication of patent specification: **04.07.84**

(51) Int. Cl.³: **G 11 B 5/28, G 11 B 5/42**

(21) Application number: **81105738.9**

(22) Date of filing: **21.07.81**

(54) Multitrack magnetic head and method of manufacture thereof.

(30) Priority: **02.09.80 US 183559**

(43) Date of publication of application:
**17.03.82 Bulletin 82/11**

(45) Publication of the grant of the patent:
**04.07.84 Bulletin 84/27**

(84) Designated Contracting States:
**DE FR GB NL**

(56) References cited:
GB - A - 879 600
US - A - 2 785 038
US - A - 2 840 643
US - A - 3 354 540
US - A - 3 613 228
US - A - 3 943 624

PATENTS ABSTRACTS OF JAPAN, vol. 1, no.
18, March 24, 1977, page 484 E 76
PATENTS ABSTRACTS OF JAPAN, vol. 1, no. 8,
March 16, 1977 page 277 E 76

(73) Proprietor: **International Business Machines
Corporation
Old Orchard Road
Armonk, N.Y. 10504 (US)**

(72) Inventor: **Chow, William Wai-Chung
1440 S. Sumatra Place
Tucson Arizona 85710 (US)**
Inventor: **Fields, Davis Stuart, Jr.
2630 North Santa Lucia Avenue
Tucson Arizona 85710 (US)**

(74) Representative: **Atchley, Martin John Waldegrave
et al,
IBM United Kingdom Patent Operations Hursley
Park
Winchester, Hants, SO21 2JN (GB)**

(58) References cited:
COMPUTER DESIGN, no. 3, March 1977
Concord, US "Comb-head design provides
competition to moving head memories", pages
26-27

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

IBM TECHNICAL DISCLOSURE BULLETIN, vol. 18, no. 6, November 1975, Armonk, N.Y. US T.E. FRANKLIN et al. "Batch fabrication method for a multiple magnetic head closure piece", page 1981
PATENTS ABSTRACTS OF JAPAN, vol. 4, no. 156, (P-34(638) October 31, 1980 page 148 P 34

## Description

This invention relates to a multitrack magnetic head and a method of manufacture thereof.

Generally, multitrack magnetic heads are formed by bonding single track modules, such as described in US—A—3,613,228, DE—A—2,032,354, FR—A—2,053,903 and GB—A—1,307,587. It is apparent that a multiplicity of modules must be properly aligned and have similar dimensions to result in precisely positioned tracks and accurately defined track widths, amongst other things. The steps of alignment, joinder and machining the several elements to precise predetermined dimensions are costly and time consuming. In addition, the resultant heads are not closely spaced to give a high data track density.

The invention seeks to provide a multitrack magnetic head that affords high data track density, that minimizes the separation between data tracks recorded on a magnetic medium, and that allows improved track definition.

The invention also seeks to provide a method of forming a multitrack magnetic head by which a reduction in manufacturing steps and savings in cost are realized.

According to a first aspect of the invention a multitrack magnetic head comprises a row of spaced magnetic blocks and a magnetic wafer bonded to the magnetic blocks to form transducing gaps filled with non-magnetic bonding, and is characterised in that one surface of a non-magnetic substrate is joined to the row of magnetic blocks thereby forming a closure section and an adjacent surface of the substrate is bonded to the magnetic wafer, the substrate, the row of magnetic blocks and the magnetic wafer forming a compact block in which the magnetic blocks are spaced and separated by non-magnetic bonding.

The invention also provides an assembly from which said closure section may be cut, comprising a magnetic block and a non-magnetic bonding, characterised in that the magnetic block consists of a first magnetic piece having alternate slots and fingers, and a second magnetic piece having alternate slots and fingers, the fingers of the first and second magnetic pieces being interdigitated, with the fingers of one magnetic piece in the slots of the other magnetic piece, magnetic pieces being bonded together by non-magnetic bonding.

The invention further provides a method of forming said closure section involving bonding a magnetic block to a non-magnetic substrate by non-magnetic bonding and slicing the magnetic block and the substrate, characterised by the steps of forming spaced slots and fingers in first and second magnetic pieces, aligning the magnetic pieces on a non-magnetic substrate with the fingers of the first and second magnetic pieces interdigitated, the fingers of one magnetic piece being in the slots of the other magnetic piece, bonding the magnetic pieces together and to the substrate by non-magnetic bonding, and slicing the substrate and pieces across the slots and fingers to form a closure section.

The scope of the invention is defined by the appended claims; and how it can be carried into effect is hereinafter particularly described with reference to the accompanying drawings, in which:—

Figure 1 is a plan view of two interdigited ferrite pieces for an assembly and method in accordance with this invention;

Figure 2 is an isometric view of the two ferrite pieces of Fig. 1 upon a substrate block preparatory to joining;

Figure 3 is an isometric view illustrating the joined assembly of the ferrite pieces and the substrate block prior to slicing;

Figure 4 is an enlarged isometric view of a section sliced from the assembly of Fig. 2 to form a closure; and

Figure 5 is an isometric view of a multitrack magnetic head according to this invention.

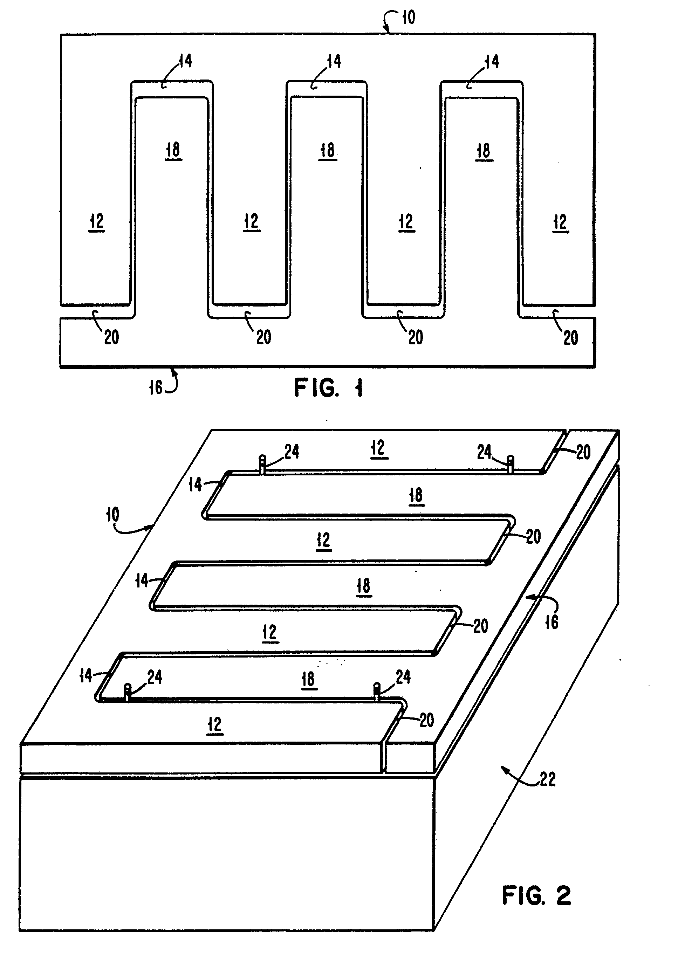

A first ferrite comb piece 10 (Fig. 1) is formed with alternating fingers 12 and slots 14, and a second ferrite comb piece 16 is formed with similar but complementary alternating fingers 18 and slots 20. The number of slots 14 corresponds to the number of fingers 18, and the number of slots 20 corresponds to the number of fingers 12. The slots 14 and 20 are of the same dimensions, and are slightly larger in length and width than the fingers 12 and 18. For example, the width of each slot is approximately 700 microns, and the width of each finger is about 500 microns. The depth or the height of the slots and fingers is about 1 mm, by way of example. The slots may be gang sawed or wire sawed individually, by well known techniques, so that the slots and fingers have substantially parallel sides, and the fingers of one piece closely fit with the slots of the other piece, so that the fingers are interdigitated and closely spaced.

The ferrite pieces 10 and 16 are bonded together preferably by glass, and to a non-magnetic ceramic substrate 22, as illustrated in Fig. 2. To ensure accurate alignment, metal wires or shims 24 are fixed securely between the ferrite pieces to act as spacers. The ferrite pieces 10 and 16 are positioned and aligned on the substrate prior to glass bonding. The alignment between the ferrite pieces is critical, whereas the alignment to the substrate is less significant.

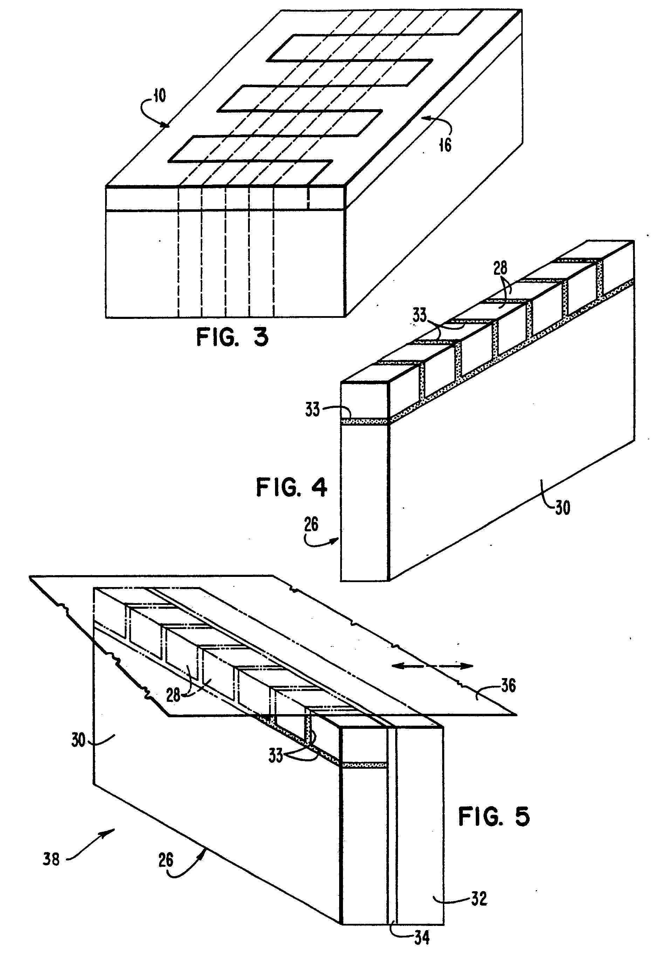

The bonded assembly (Fig. 3) is sliced into closure sections 26 (Fig. 4), as shown by the dash lines in Fig. 3. Each closure section 26 consists of a row of magnetic ferrite blocks 28 supported by a nonmagnetic substrate 30. Alternate blocks 28 are parts of fingers 12 and 18, respectively. The ferrite blocks are joined together and to the nonmagnetic substrate 30 by glass bonding 33. The width of each ferrite block 28 determines the width of the data track, and the width of the glass bond 33 between adjacent ferrite blocks 28 establishes the separation distance between the data tracks.

Finally, a ferrite wafer 32 having the same length and width as the closure section 26 is cemented to the section 26 to form a write head 38 (Fig. 5). A cement layer 34 between the wafer 32 and section 26 delineates the transducing gap that co-acts with a magnetic medium, such as a magnetic tape 36. Multiple tracks are recorded along the moving tape 36 that correspond in width to the width of each ferrite block 28 disposed on the substrate 30.

By virtue of this invention, a thicker cutting wheel that affords greater rigidity and less wobble may be used for cutting slots in ferrite, with the realization of accurate alignment and spacing of the multiple tracks. The use of a thicker cutting wheel can greatly improve tool life. The novel configuration and method allows a simplified, inexpensive approach to be employed for making multitrack magnetic heads.

## Claims

1. A multi-track magnetic head (38) comprising a row of spaced magnetic blocks (28) and a magnetic wafer (32) bonded to the magnetic blocks to form transducing gaps filled with non-magnetic bonding (34), characterised in that one surface of a non-magnetic substrate (30) is joined to the row of magnetic blocks (28) thereby forming a closure section and an adjacent surface of the substrate is bonded to the magnetic wafer (32), the substrate (30), the row of magnetic blocks (28) and the magnetic wafer (32) forming a compact block in which the magnetic blocks (28) are spaced and separated by non-magnetic bonding (33).

2. A head according to claim 1, in which the substrate (30) is made of a ceramic material.

3. A head according to claim 1 or 2, in which the magnetic blocks (28) are made of ferrite.

4. A head according to claim 1, 2 or 3, in which the magnetic blocks (28) are of the same width.

5. A head according to any preceding claim, in which the magnetic wafer (32) is bonded to the substrate (30) by non-magnetic bonding (34).

6. A head according to any preceding claim, in which the magnetic blocks (28) are bonded to the substrate (30) by non-magnetic bonding (33).

7. An assembly from which closure sections having the features of the closure section (26) as recited in claim 1, 3 or 4 may be cut, comprising a magnetic block (10, 16) and a non-magnetic substrate (22) bonded together by non-magnetic bonding (33), characterised in that the magnetic block (10, 16) consists of a first magnetic piece (10) having alternate slots (14) and fingers (12), and a second magnetic piece (16) having alternate slots (20) and fingers (18), the fingers (12, 18) of the first and second magnetic pieces (10, 16) being interdigitated, with the fingers of one magnetic piece in the slots of the other magnetic piece, the magnetic pieces being bonded together by non-magnetic bonding (33).

8. An assembly according to claim 7, in which the magnetic pieces (10, 16) are of ferrite.

9. An assembly according to claim 7 or 8, in which the fingers of both magnetic pieces (10, 16) are of the same width.

10. A method of forming a closure section having the features of the closure section as recited in claim 1 involving bonding a magnetic block (10, 16) to a non-magnetic substrate (22) by non-magnetic bonding (33) and slicing the magnetic block and the substrate, characterised by the steps of forming spaced slots (14, 20) and fingers (12, 18) in first and second magnetic pieces (10, 16), aligning the magnetic pieces on a non-magnetic substrate (22) with the fingers of the first and second magnetic pieces interdigitated, the fingers of one magnetic piece being in the slots of the other magnetic piece, bonding the magnetic pieces together and to the substrate by non-magnetic bonding (33), and slicing the substrate and pieces across the slots and fingers to form a closure section (26).

11. A method according to claim 10, in which the magnetic pieces (10, 16) are of ferrite.

12. A method according to 10 or 11, in which the fingers (12, 18) of both pieces (10, 16) are of the same width.

13. A method according to claim 10, 11 or 12, in which the magnetic pieces (10, 16) are aligned by positioning shims (24) between the pieces.

14. A method according to claim 10, 11, 12 or 13, in which the bonding is of glass.

15. A method of forming a multitrack magnetic head, comprising forming a closure section by a method according to any of claims 10 to 14, and bonding a magnetic wafer (32) to the closure section (26) by non-magnetic bonding (34).

## Patentansprüche

1. Mehrspur-Magnetkopf (38) mit einer Zeile von im Abstand liegenden magnetischen Blöcken (28) und einem mit den Magnetblöcken zur Ausbildung von mit nichtmagnetischem Bindemittel (34) gefüllten Wandlerspalten verbundenen magnetischen Plättchen (32), dadurch gekennzeichnet, daß eine Oberfläche eines nicht-magnetischen Substrats (30) an die Zeile magnetischer Blöcke (28) angefügt ist, womit ein Abschlußabschnitt ausgebildet wird, und eine angrenzende Fläche des Substrats mit dem magnetischen Plättchen (32) verbunden ist, wobei das Substrat (30), die Zeile von magnetischen Blöcken (28) und das magnetische Plättchen (32) einen kompakten Block bilden, in welchem die magnetischen Blöcke (28) durch ein nicht-magnetisches Bindemittel (33) im Abstand liegen und getrennt sind.

2. Kopf nach Anspruch 1, bei welchem das Substrat (30) aus einem keramischen Material hergestellt ist.

3. Kopf nach Anspruch 1 oder 2, bei welchem die magnetischen Blöcke (28) aus Ferrit hergestellt sind.

4. Kopf nach Anspruch 1, 2 oder 3, bei welchem die magnetischen Blöcke (28) die gleiche Breite haben.

5. Kopf nach irgendeinem vorstehenden Anspruch, bei welchem das magnetische Plättchen (32) mit dem Substrat (30) durch ein nicht-magnetisches Bindemittel (34) verbunden ist.

6. Kopf nach irgendeinem vorstehenden Anspruch, bei welchem die magnetischen Blöcke (28) mit dem Substrat (30) durch ein nicht-magnetisches Bindemittel (33) verbunden sind.

7. Aufbau, aus welchem Abschlußabschnitte mit den Merkmalen des Abschlußabschnittes (26) nach Anspruch 1, 3 oder 4 herausgeschnitten werden können, mit einem magnetischen Block (10, 16) und einem nicht-magnetischen Substrat (22), die miteinander durch ein nicht-magnetisches Bindemittel (33) verbunden sind, dadurch gekennzeichnet, daß der magnetische Block (10, 16) aus einem abwechselnd Schlitze (14) und Finger (12) aufweisenden ersten magnetisches Stück (10) und einem abwechselnd Schlitze (20) und Finger (18) aufweisenden zweiten magnetisches Stück (16) besteht, wobei die Finger (12, 18) des ersten und des zweiten magnetischen Stücks (10, 16) mit den Fingern des einen magnetischen Stücks in den Schlitzen des anderen magnetischen Stücks befindlich ineinandergreifen und die magnetischen Stücke durch ein nicht-magnetisches Bindemittel (33) miteinander verbunden sind.

8. Aufbau nach Anspruch 7, bei welchem die magnetischen Stücke (10, 16) aus Ferrit bestehen.

9. Aufbau nach Anspruch 7 oder 8, bei welchem die Finger beider magnetischer Stücke (10, 16) die gleiche Breite haben.

10. Verfahren zur Ausbildung eines Abschlußabschnitts mit den Merkmalen des Abschlußabschnitts nach Anspruch 1, welches das Verbinden eines magnetischen Blocks (10, 16) mit einem nicht-magnetisches Substrat (22) durch ein nicht-magnetisches Bindemittel (33) und das In-Scheiben-Schneiden des magnetischen Blocks und des Substrats beinhaltet, gekennzeichnet durch die Schritte eines Ausbildens von in Abstand liegenden Schlitzen (14, 20) und Fingern (12, 18) in einem ersten und einem zweiten magnetischen Stück (10, 16), eines Ausrichtens der magnetischen Stücke auf einem nicht-magnetischen Substrat (22) mit ineinandergreifenden Fingern des ersten und des zweiten magnetischen Stücks, wobei sich die Finger eines magnetischen Stücks in den Schlitzen des anderen magnetischen Stücks befinden, eines Verbindens der magnetischen Stücke miteinander und mit dem Substrat durch ein nicht-magnetisches Bindemittel (33) und eines In-Scheiben-Schneidens des Substrats und der Stücke quer zu den Schlitzen und Fingern zur Ausbildung eines Abschlußabschnitts (26).

11. Verfahren nach Anspruch 10, bei welchem die magnetischen Stücke (10, 16) aus Ferrit bestehen.

12. Verfahren nach Anspruch 10 oder 11, bei welchem die Finger (12, 18) beider Stücke (10, 16) die gleiche Breite haben.

13. Verfahren nach Anspruch 10, 11 oder 12, bei welchem die magnetischen Stücke (10, 16) durch Anordnen von Abstandsstücken (24) zwischen den Stücken ausgerichtet werden.

14. Verfahren nach Anspruch 10, 11, 12 oder 13, bei welchem das Bindemittel aus Glas besteht.

15. Verfahren zur Ausbildung eines Mehrspur-Magnetkopfs, welches das Ausbilden eines Abschlußabschnitts durch ein Verfahren nach irgendeinem der Ansprüche 10 bis 14 und ein Verbinden eines magnetischen Plättchens (32) mit dem Abschlußabschnitt (26) durch ein nicht-magnetisches Bindemittel (34) umfaßt.

**Revendications**

1. Une tête magnétique multipiste (38) comprenant une rangée de blocs magnétiques espacés les uns des autres (28) et une galette magnétique (32) collée aux blocs magnétiques pour constituer des entrefers transducteurs remplis de colle non magnétique (34), caractérisée en ce qu'une surface de substrat non magnétique (30) est assemblée à la rangée de blocks magnétiques (28), formant ainsi une section de fermeture et une surface adjacente du substrat est collée à la galette magnétique (32), au substrat (30), à la rangée de blocs magnétiques (28), à la galette magnétique (32) formant un bloc compact dans lequel les blocs magnétiques (28) sont espacés et séparés les uns des autres par de la colle non magnétique (33).

2. Une tête conforme à la revendication 1, dans laquelle le substrat (30) est fait d'un matériau céramique.

3. Une tête conforme à la revendication 1 ou 2, dans laquelle les blocs magnétiques (28) sont en ferrite.

4. Une tête conforme à la revendication 1, 2 ou 3, dans laquelle les blocs magnétiques (28) sont de largeur identique.

5. Une tête conforme à l'une quelconque des revendications précédentes, dans laquelle la galette magnétique (32) est collée au substrat (30) par une colle non magnétique (34).

6. Une tête conforme à l'une quelconque des revendications précédentes, dans laquelle les blocs magnétiques (28) sont collés au substrat (30) par une colle non magnétique (33).

7. Un ensemble dont les sections de fermeture ayant les caractéristiques de la section de fermeture (26) citée à la revendication 1, 3 ou 4, peuvent être découpées, et comprenant un bloc magnétique (10, 16) et un substrat non magnétique (22) collés ensemble par une colle non magnétique (33), caractérisé en ce que le bloc magnétique (10, 16) consiste en une première pièce magnétique (10) ayant des fentes alternées (14) et des doigts alternés (18), les doigts (12, 18) de la première et de la seconde pièce magnétiques (10, 16) étant disposés en quinconce, les doigts d'une pièce magnétique entrant dans les fentes de l'autre pièce magnétique, les pièces magnétiques étant collées ensemble par une colle non magnétique (33).

8. Un ensemble conforme à la revendication 7, dans lequel les pièces magnétiques (10, 16) sont en ferrite.

9. Un ensemble conforme aux revendications 7 ou 8, dans lequel les doigts des deux pièces magnétiques (10, 16) sont de même largeur.

10. Une méthode de formation d'une section de fermeture présentant les caractéristiques de la section de fermeture citée à la revendication 1, comprenant le collage d'un bloc magnétique (10, 16) à un substrat non magnétique (22) par de la colle non magnétique (33) et le découpage en tranches du bloc magnétique et du substrat, caractérisée par les opérations de formation de fentes (14, 20) espacées les unes des autres et de doigts également espacés (12, 18) dans les première et seconde pièces magnétiques (10, 16) l'alignement des pièces magnétiques sur un substrat non magnétque (22) avec les doigts des première et seconde pièces magnétiques disposés en quiconce, les doigts d'une pièce magnétique étant engagés dans les fentes de l'autre pièce magnétique, le collage des pièces magnétiques ensemble et au substrat par une colle non magnétique (33), et le découpage en tranches du substrat et des pièces à travers les doigts et les fentes pour former une section de fermeture (26).

11. Une méthode conforme à la revendication 10 dans laquelle les pièces magnétiques (10, 16) sont en ferrite.

12. Une méthode conforme aux revendications 10 ou 11, dans laquelle les doigts (12, 18) des deux pièces (10, 16) sont de même largeur.

13. Une méthode conforme à la revendication 10, 11 ou 12, dans laquelle les pièces magnétiques (10, 16) sont alignées par des cales de positionnement (24) disposées entre les pièces.

14. Une méthode conforme à la revendication 10, 11, 12 ou 13, dans laquelle la colle est de verre.

15. Une méthode de formation d'une tête magnétique multipiste comprenant la formation d'une section de fermeture par une méthode conforme à l'une quelconque des revendications 10 à 14, et le collage d'une galette magnétique (32) à la section de fermeture (26) par une colle non magnétique (34).

**FIG. 1**

**FIG. 2**

FIG. 3

FIG. 4

FIG. 5